(19) Europäisches Patentamt
European Patent Office
Office européen des brevets

(11) **EP 4 496 261 A1**

(12) **EUROPEAN PATENT APPLICATION**

(43) Date of publication:
**22.01.2025 Bulletin 2025/04**

(21) Application number: **23186448.9**

(22) Date of filing: **19.07.2023**

(51) International Patent Classification (IPC):
**H04L 9/08** $^{(2006.01)}$      **H04L 9/30** $^{(2006.01)}$
**H04L 9/32** $^{(2006.01)}$

(52) Cooperative Patent Classification (CPC):
**H04L 9/085; H04L 9/3093; H04L 9/3255**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Cysec SA**
**1015 Lausanne (CH)**

(72) Inventors:
- **DUC, Alexandre**
 **1009 Pully (CH)**
- **MÜLLER, Robin**
 **2518 Nods (CH)**
- **VALLON, Axel**
 **1400 Yverdon-les-Bains (CH)**

(74) Representative: **Plasseraud IP**
**104 Rue de Richelieu**
**CS92104**
**75080 Paris Cedex 02 (FR)**

(54) **POST-QUANTUM THRESHOLD SIGNATURE**

(57) A method of performing a threshold digital signature of a message, the method comprising:
receiving, at a signing entity, one of a plurality of private signing keys and a public verification key, wherein each of the plurality of private signing keys is associated with the public verification key and the public and private keys are generated using a lattice-based signature scheme;
computing a first commitment and transmitting the first commitment to each of a plurality of remote entities;
receiving a commitment from each of a subset of the plurality of remote entities;
computing a first partial signature using the received commitments and the first commitment, the received private key, and the message, wherein the computation of the first partial signature includes performing a linear transformation using a polynomial vector threshold secret sharing scheme, PVSS, on the commitments and combining the transformed commitments;
transmitting the first partial signature to each of the subset of remote entities;
receiving a partial signature from each of the subset of the plurality of remote entities; and
computing a combined signature using the computed first partial signature and the received partial signatures.

```
                              ┌──────────────────┐ ──── S101
                              │ Key Generation   │
                              └──────────────────┘
                                       │
                                       ▼
                              ┌──────────────────┐ ──── S103
                              │ Sign 1           │
                              └──────────────────┘
                                       │
                                       ▼
                              ┌──────────────────┐ ──── S105
                              │ Sign 2           │
                              └──────────────────┘
                                       │
                                       ▼
                              ┌──────────────────┐ ──── S107
                              │ Sign Combine     │
                              └──────────────────┘
                                       │
                                       ▼
                                     End
```

Figure 1

**Description**

**Background**

**Technical field**

The present application relates to the provision of digital signatures for digital messages. More specifically, the application relates to a method for the provision of digital signatures for authenticating digital messages and an associated apparatus for performing the method. The application also relates to a method for verifying such signatures and an associated apparatus.

**Related art**

A digital signature scheme is a cryptographic algorithm that is used to prove that a digital message, such as a document or software, originates from a trusted source and has not been altered. Typically, a signature scheme will use asymmetric cryptography in the form of a private key and corresponding public key. A singer will sign a message using the private key. Another party can then verify that the message was signed by the party that holds the private key using the public key.

Typically, a traditional signature scheme is a tuple of three algorithms: KeyGen (key generation), Sign (signature of the document) and Verify (verification that the signature and message are genuine). KeyGen is used to generate a private key and a public key. The private key must be protected against unauthorized access, while the public key is distributed to clients. Sign uses the private key to prove authenticity and integrity on a message by generating a signature. Verify checks the validity of the signature under a specific public key.

A post-quantum threshold signature (PQ-TS) scheme is an extension of a traditional signature scheme. It has the aim of increasing security and fault tolerance. In particular, it is designed to be resistant to attacks by quantum computers.

While traditional signature schemes suffer from a single point of failure due to their unique private key, threshold signature schemes avoid that problem by introducing two additional parameters: a number of signers (n) and a threshold ($\tau$). The number of signers defines the number of private keys to generate, i.e., the total number of signers that may be involved at some point in the signing process. The threshold is the effective number of signers, amongst all of the possible signers, that must be involved every time a message is signed. Once a message has been signed by $\tau$ signers, the signature does not contain any indication as to who was involved.

Thus far, there has been little work carried out in the field of post-quantum threshold signatures. The reason for this may be the general difficulty in converting a post-quantum signature scheme into a threshold scheme.

Lattice-based cryptography employs the properties of lattices as the source of cryptographic primitives used in the process of signing. A hard problem, such as determining a shortest vector in an integer lattice, can be used as the source of such cryptographic primitives. Here, a problem is termed "hard" if there is no polynomial time algorithm that can solve the problem.

However, there has so far been no successful implementation of a lattice-based post-quantum threshold signature scheme that can offer proof of security.

It is an aim of the present invention to solve or mitigate at least some of the above-described problems.

Summary

In a first aspect, there is provided a method of performing a threshold digital signature of a message, the method comprising:

receiving, at a signing entity, one of a plurality of private signing keys and a public verification key, wherein each of the plurality of private signing keys is associated with the public verification key and the public and private keys are generated using a lattice-based signature scheme;

computing a first commitment and transmitting the first commitment to each of a plurality of remote entities;

receiving a commitment from each of a subset of the plurality of remote entities;

computing a first partial signature using the received commitments and the first commitment, the received private key, and the message, wherein the computation of the first partial signature includes performing a linear transformation using a polynomial vector threshold secret sharing scheme, PVSS, on the commitments and combining the transformed commitments;

transmitting the first partial signature to each of the subset of remote entities;

receiving a partial signature from each of the subset of the plurality of remote entities; and

computing a combined signature using the computed first partial signature and the received partial signatures.

Thus, the method can provide a means by which a lattice-based post-quantum threshold signature scheme can be implemented.

In some embodiments, the method provides that the computation of the first commitment comprises sampling a linear transformation between a matrix of polynomials and random polynomial vectors that are elements of the polynomial ring $\mathbb{Z}_q[X]/(X^N + 1)$.

In some embodiments, the method provides that the computation of the first partial signature satisfies $w^v = \sum_{j \in s} wj^{(v)} \lambda_{s,j}$, where $\mathbf{w}^{(v)}$ represents the first partial signature, $\mathbf{w_j}$ represents each commitment, s is the set of signers, the summation is performed over j, and $\lambda_S$ is a reconstruction vector satisfying $\lambda_S \in \{-1, 0, 1\}^{ds}$ where $d_S$ is a parameter related to the implementation of the PVSS used to generate the keys.

In some embodiments, the method provides that the first partial signature further comprises a polynomial that is computed using the computed first commitment, the message and a cryptographically secure hash function.

In some embodiments, the method further comprises a validation step performed on the first commitment and the received commitments, wherein a commitment is rejected if the commitment is not a member of the ring $R_q^x$. Thus, the method can provide a means by which commitments can be checked as to whether they are a multiplicative inverse. Commitments that do not fulfil this validation can be determined to be unsuitable and can be eliminated from the method.

In some embodiments, the method further provides that the computation of the combined signature further comprises applying a linear transform to the received partial signatures and the first partial signature to satisfy $\mathbf{z} := \sum_{j \in s} \mathbf{z}_j \lambda_{s,j}$ where $\mathbf{z}$: represents the combined signature j represents an iteration over every signer, s, and $\mathbf{z}$ is the partial signature.

In some embodiments, the method further comprises a rejection sampling step performed on the first partial signature, wherein first partial signature is rejected if:

$$\rho \geq \min\left(D_{\sqrt{\sigma_1}}^{l+k}(\mathbf{z}) \,/\, (M \cdot D_{\sqrt{s},\mathbf{v}}^{l+k}(\mathbf{z})), 1\right),$$

$$s := \sigma_1^2 + \sigma_y^2 \sum_{v=1}^{m} b^{(v)2}, \quad \rho \leftarrow\!\$\, [0, 1],$$

where D is a Gaussian distribution, z is the partial signature l and k are the width and length respectively of a random matrix A, m is a parameter related to the security, $\sigma_1$ and $\sigma_y$ are standard deviations of different Gaussian distributions, M is a security parameter and $b^{(v)}$ is a value sampled from a Gaussian distribution.

Thus, the method provides a means for rejecting unsuitable partial signatures.

In some embodiments, the method provides, at a key-generation entity, generating the plurality of private signing keys and the public verification key by:

generating a threshold Boolean formula representing a $\tau$-out-of-n access structure;

sampling random polynomial vectors which are elements of the polynomial ring $\mathbb{Z}_q[X]/(X^N + 1)$;

computing n private keys through a linear combination of the random polynomials using the Benaloh-Leichter Generalized Secret Sharing scheme, BL88;

generating a public matrix of polynomials $\mathbf{A}$ in $\mathbb{Z}_q[X]/(X^N + 1)$ uniformly at random; and

computing a public vector $\mathbf{t}$ through a linear transformation between $\mathbf{A}$ and a linear combination of the n private keys.

In some embodiments, the method provides that the private signing keys are shared using a polynomial vector threshold secret sharing scheme, PVSS.

In some embodiments, the method provides that the step of computing the combined signature is carried out at an entity that is remote from the signing entity.

In some embodiments, the method provides that a plurality of private signing keys are received at the signing entity and the signing entity computes a first commitment from each of the plurality of received private signing keys and a first selected first commitment is transmitted to each of the plurality of remote entities.

Thus, the method provides a means by which failures in the generation of commitments and/or partial signatures can be handled without ending the signature process.

In some embodiments, the method provides that a second selected first commitment is transmitted to the plurality of remote entities when a determination is made that the first selected first commitment is rejected.

Thus, the method can provide a means by which failures in the generation of commitments and/or partial signatures can be handled without ending the signature process.

In some embodiments, there is provided a computer device comprising a processor and a memory, wherein the memory includes instructions which, when implemented, cause the processor to perform all of the steps of the method.

In some embodiments, there is provided a computer device, wherein the private signing key is stored within a secure hardware device within the computer device.

Thus, there is provided a secure means to store the private signing key.

Further aspects provide a computer program product comprising computer readable instructions which, when implemented on a system comprising a processor perform all of the steps of the method and a computer readable medium comprising the computer program.

## Brief description of the drawings

The invention will now be described with reference to the accompanying Figures of which:

Figure 1 illustrates an outline method of signing a message according to an embodiment;
Figure 2 illustrates a method of key generation;
Figure 3 illustrates further details of the key generation process;
Figures 4a and 4b illustrate details of the Sign1 process;
Figure 5 illustrates details of the Sign2 process;
Figures 6a and 6b illustrate details of the SignCombine process;
Figure 7 illustrates a process of verification of a signed message; and
Figure 8 illustrates an example hardware device for implementing methods according to the described embodiments.

## Definitions

Within this disclosure, the following definitions are used:

The terms n and t respectively denote the number of key shares and the threshold secret sharing or in a threshold primitive.

Given an integer $i \in \mathbb{N}$, [i] is used to represent the set {1, 2, ... , i}.

$y \leftarrow F(x)$ is used to denote assigning the output of an algorithm F to a variable y, while $F(x) \rightarrow y$ denotes the event that F outputs a value y.

Sampling a variable $\rho$ uniformly from a finite set S is denoted by $\rho \leftarrow\$ S$.

In a distributed protocol, [j : x] signifies that the value x is private to the party j.

Similarly, $[\![sk]\!]_{[n]}$ signifies that each party i, $i \in [n]$ knows a private value $sk_i$. $f : \mathbb{N} \rightarrow \mathbb{N}$ is a negligible function, negl, if for every positive polynomial p there is a $k_p \in \mathbb{N}$ such that $negl(k) \leq 1/p(k)$ for all $k \geq k_p$.

k is the security parameter.

The abbreviation PPT stands for probabilistic polynomial-time.

Vectors and matrices are denoted in bold such as $\mathbf{z}$, $\mathbf{z_i}$ is used for the i-th coordinate of the vector $\mathbf{z}$.

The following norm definitions are used:

the $\ell_1$ norm $\|\mathbf{z}\|_1 := P \sum_i |\mathbf{z}_i|$,

the Euclidean norm $\|\mathbf{z}\|_2 := \sqrt{\sum_i \mathbf{z}_i^2}$

the infinity norm $\|\mathbf{z}\|_\infty := \max(|\mathbf{z}_1|, ... , |\mathbf{z}_N|)$.

The following definitions related to lattices are used:

**Definition 1** Learning with errors (LWE). Given integers m, k, a probability distribution $\chi$ over $\mathbb{Z}_p$ and two pairs ( $A \in \mathbb{Z}_q^{m \times k}$ , $\mathbf{t} := \mathbf{A}s_1 + s_2$), ( $A' \in \mathbb{Z}_q^{m \times k}$ , $\mathbf{t}' \in \mathbb{Z}_q^m$ ) where **A**, **A'**, **t'** are sampled uniformly at random, $s_1$ is sampled uniformly at random from $\chi^k$ and $s_2$ is sampled uniformly at random from $\chi^m$. Distinguish t and t'. The advantage of A is described as follows:

$$\text{Adv}_{m,k,\chi}^{\text{LWE}}(\mathcal{A}) := \left| \Pr\left[ b = 1 \mid \mathbf{A} \leftarrow_\$ \mathbb{Z}_q^{m \times k}; \mathbf{t} \leftarrow_\$ \mathbb{Z}_q^m; b \leftarrow_\$ \mathcal{A}(\mathbf{A}, \mathbf{t}) \right] \right.$$
$$\left. - \Pr\left[ b = 1 \mid \mathbf{A} \leftarrow_\$ \mathbb{Z}_q^{m \times k}; (\mathbf{s}_1, \mathbf{s}_2) \leftarrow_\$ \chi^{k \times m}; b \leftarrow_\$ \mathcal{A}(\mathbf{A}, \mathbf{A}\mathbf{s}_1 + \mathbf{s}_2) \right] \right|$$

**Definition 2** Short integer solution (SIS). Given integers m, k, $\gamma$ a matrix $A \in \mathbb{Z}_q^{m \times k}$ sampled uniformly at random, find a non-zero vector y with coefficients at most $\gamma$ such that Ay = 0. The advantage of A is described as follows:

$$\text{Adv}_{m,k,\gamma}^{\text{SIS}}(\mathcal{A}) := \Pr\left[ 0 < \|\mathbf{y}\|_\infty \leq \gamma \wedge \mathbf{A}\mathbf{y} = 0 \mid \mathbf{A} \leftarrow_\$ \mathbb{Z}_q^{m \times k}; \mathbf{y} \leftarrow_\$ \mathcal{A}(\mathbf{A}) \right]$$

**Definition 3** (Module-LWE). Given integers m, k, a ring $R_q := \mathbb{Z}_q/(X^n+1)$ , a probability distribution $\chi$ over $R_q$ and two pairs ( $A \in R_q^{m \times k}$ , $\mathbf{t} := \mathbf{A}s_1 + s_2$), ( $A' \in R_q^{m \times k}$ , $\mathbf{t}' \in \mathbf{R}_q^m$ ) where **A**, A', t' are sampled uniformly at random, $s_1$ is sampled uniformly at random from $\chi_k$ and $s_2$ is sampled uniformly at random from $\chi^m$. Distinguish t and t'. The advantage of A is described as follows:

$$\text{Adv}_{m,k,\chi}^{\text{MLWE}}(\mathcal{A}) := \left| \Pr\left[ b = 1 \mid \mathbf{A} \leftarrow_\$ R_q^{m \times k}; \mathbf{t} \leftarrow_\$ R_q^m; b \leftarrow_\$ \mathcal{A}(\mathbf{A}, \mathbf{t}) \right] \right.$$
$$\left. - \Pr\left[ b = 1 \mid \mathbf{A} \leftarrow_\$ R_q^{m \times k}; (\mathbf{s}_1, \mathbf{s}_2) \leftarrow_\$ \chi^{k \times m}; b \leftarrow_\$ \mathcal{A}(\mathbf{A}, \mathbf{A}\mathbf{s}_1 + \mathbf{s}_2) \right] \right|$$

Ring-LWE is a special case where m, k = 1.

**Definition 4** (Module-SIS). Given integers m, k, $\gamma$, a ring $R_q := \mathbb{Z}_q/(X^n+1)$ , a matrix $A \in R_q^{m \times k}$ sampled uniformly at random, find a non-zero vector y with coefficients at most $\gamma$ such that **Ay** = 0. The advantage of A is described as follows:

$$\text{Adv}_{m,k,\gamma}^{\text{MSIS}}(\mathcal{A}) := \Pr\left[ 0 < \|\mathbf{y}\|_\infty \leq \gamma \wedge \mathbf{A}\mathbf{y} = 0 \mid \mathbf{A} \leftarrow_\$ R_q^{m \times k}; \mathbf{y} \leftarrow_\$ \mathcal{A}(\mathbf{A}) \right]$$

Ring-SIS is a special case where m, k = 1.

The algorithm according to embodiments as described herein uses the following parameters:

n        Number of parties.

$R_q$       The underlying ring over which computations for the algorithm are performed.

k        The height of the a random matrix A.

l        The width of the random matrix A.

m        A parameter that has an impact on security: the higher the value of m, the more secure but less efficient.

$\sigma_1$       Standard deviation of a Gaussian distribution.

$\sigma_b$       Standard deviation of another Gaussian distribution.

$\sigma_y$     Standard deviation of another Gaussian distribution.

$\mu$     The message to sign.

M     A parameter affecting the rejection probability in the rejection sampling algorithm.

**Detailed Description**

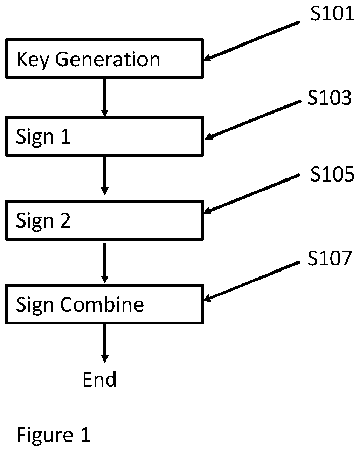

Figure 1 illustrates an outline method of signing a message according to an embodiment. As illustrated, the method starts with a step of key generation S101, this is followed by a first signature step S103, a second signature step S105 and finally a signature combination step S107. Further details of these steps will be explained below.

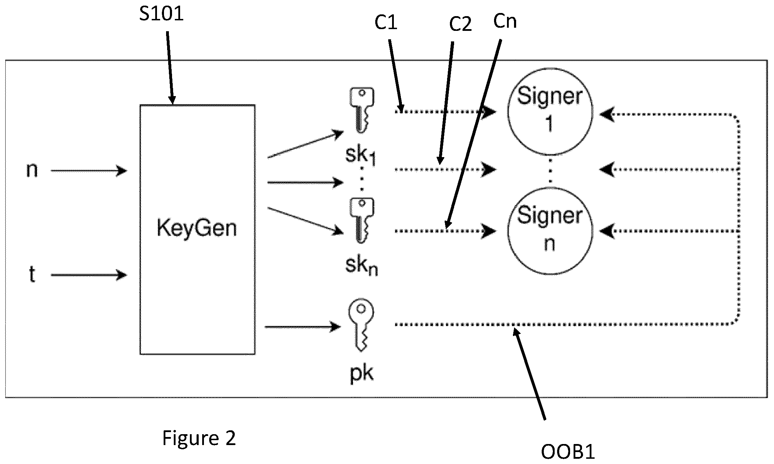

The key generation process S101 used in a threshold signature scheme according to the disclosure is illustrated in Figure 2. As illustrated in figure 2, the key generation process S101 requires, as inputs, a number of signers n and a threshold number of signers $\tau$. Using these inputs, a key generation process is used to generate n private keys, $sk_1$ to $sk_n$, each of which is output to a different signer via a communications channel C1 to Cn. In some embodiments, the private keys are each unique, in further embodiments, the private keys are similar or identical.

The key generation process also generates a public key pk, which is transmitted to each of the signers via a channel. In some embodiments, this channel is the same channel via which the private keys are distributed. In further embodiments, the channel is different from that used for distribution of the private keys and is an out-of-bound channel, OOB1.

In general, when performing a signature, a number of signers will each supply information to the other signers to permit some a combined signature to be derived. This information is termed committed values or commitments. When a number of signers that is greater or equal to the threshold number, $\tau$, have supplied their committed value, then the message can be signed. Verification of the signed message can then be carried out by using the public key to decrypt the encrypted message.

The key generation process S101 can be carried out using an entity that is remote from the entities that will later perform the signing process, such as at a trusted third party. The remote entity can then distribute the generated public and private keys as necessary to the signing entities. In alternative embodiments, the keys can be generated by one of the signing entities. In further embodiments, the keys can be generated in a distributed manner by the signing entities or other entities, or both.

In alternative embodiments, the key generation can be carried out prior to, or at the time of, construction of the signing entity. The keys can be pre-stored in the signing entity during manufacture of the signing entity thereby assuring that the keys can remain secure.

In embodiments, the keys can be stored in a hardware device that can be installed in the signing entity. Such a hardware device can, for example, take the form of a trusted platform module, TPM. Thus, for example, the TPM containing the private and/or public (verification) keys can be inserted into the signing entity during or after manufacture so that the signing entity has received the keys.

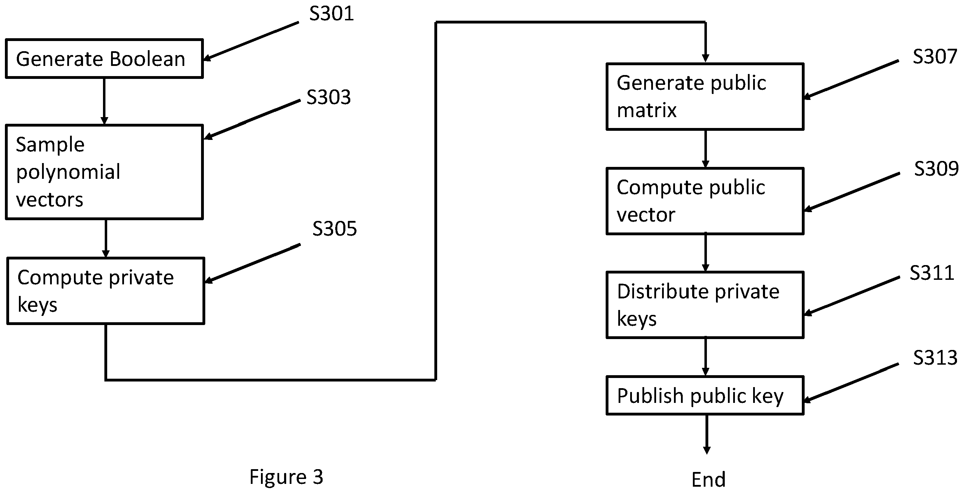

Figure 3 illustrates details of the key generation process S101. The process proceeds as follows:

1. Generate S301 a threshold Boolean formula representing a $\tau$-out-of-n access structure.

2. Random sample S303 random polynomial vectors with small coefficients. The polynomials are elements of the polynomial ring $\mathbb{Z}_q[X]/(X^N + 1)$. The skilled person will recognise that other polynomials can equally be used. Thus, in alternative embodiments, the polynomials are elements of $\mathbb{Z}_q[X]/(X^p - x - 1)$ where p is a prime number.

3. Compute S305 n private keys through a linear combination of the polynomials generated in Step 2. In some embodiments, this step is carried out using the Benaloh-Leichter Generalized Secret Sharing scheme (BL88).

4. Generate S307 a public matrix of polynomials A with elements in $\mathbb{Z}_q[X]/(X^N + 1)$ uniformly at random.

5. Compute S309 a public vector t through a linear transformation between A and a linear combination of the n private keys.

6. Distribute S311 at least some of the private keys. In some embodiments, all of the private keys are distributed to different signers. In some embodiments, this distribution is via an out-of-bound channel.

7. Publish S313 the public key. In some embodiments, the publication is via an out-of-bound channel.

The method of key generation is described in more detail below. The following definitions are used:

Polynomial ring $R_q = \mathbb{Z}_q[X]/(X^N + 1)$, the set $S_\eta \leftarrow\$ \{s \in R_q \mid \|s\|_\infty \leq \eta\}$, the hash functions $\mathcal{H}_{non} : \{0, 1\}^* \to \{0, 1\}^l$, $\mathcal{H}_{sig} : \{0, 1\}^* \to C$ where $C = \{c \in R_q \mid \|c\|_\infty = 1 \wedge \|c\|_1 = \tau\}$.

$$
\begin{aligned}
&\underline{\text{Gen}(t, n)}: \\
&1: \ \mathbf{A} \leftarrow\$ R_q^{k \times \ell} \\
&2: \ \overline{\mathbf{A}} := [\mathbf{A} \mid \mathbb{I}_k] \\
&3: \ \mathbf{s} \leftarrow\$ S_\eta^{\ell+k} \\
&4: \ \mathbf{t} := \overline{\mathbf{A}}\mathbf{s} \\
&5: \ \mathsf{SK}_{[\![n]\!]} \leftarrow\$ \mathsf{PVSS.Share}(\mathbf{s}, t, n) \\
&6: \ \textbf{return} \ ((\overline{\mathbf{A}}, \mathbf{t}), \mathsf{SK}_{[\![n]\!]}) \\
&\text{Distribute the set of shares } \mathsf{SK}_i = \{\mathbf{sk}_j\}_{j \in \psi^{-1}(i)} \text{ to each} \\
&\text{party } i \in [n].
\end{aligned}
$$

In step 1 above, a random vector, A, is generated by sampling from a Gaussian distribution. The skilled person will recognise that other probability distributions can equally be used, such as a binomial distribution or other distributions. Thus, in alternative embodiments a different probability distribution is employed. The random vector corresponds to a random k x l matrix **A** from the uniform distribution on $R_q$. This corresponds to step S307.

In step 2 vector **A** is extended by adding an identity matrix to obtain $\overline{\mathbf{A}}$, which forms a part of the public key. The process simplifies later calculations.

In step 3, a random vector **s** of size **l+k** is obtained. This is issued from a uniform distribution over small values in $R_q$.

In step 4, $\overline{\mathbf{A}}$ is multiplied by s to obtain t, which is part of the public key.

In step 5, s is split into n shares such that $\tau$ shares are required to recover s. In step 5, a polynomial vector threshold secret sharing scheme (PVSS) is used to share a secret vector $s \in R_q^e$ for the threshold access structure $\text{Th}_t^n$. The threshold access structure is composed of all the unique subsets of parties Pi ∈ {1, ... , n} that are of size at least $\tau$. In some embodiments, only the minimal threshold access structure $\overline{\text{Th}_t^n}$ is used. This contains only subsets of size exactly $\tau$, and so $\overline{\text{Th}_{t\tau}^n} = \binom{n}{\tau}$.

In step 6, the public key is output as $\overline{\mathbf{A}}$ and **t** and the private keys are also output.

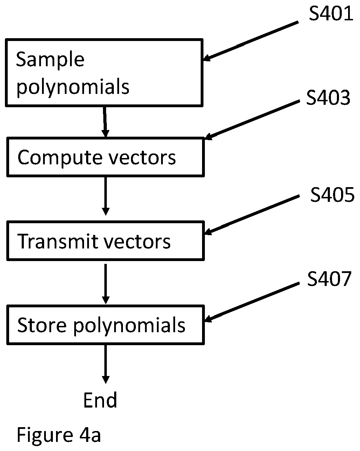

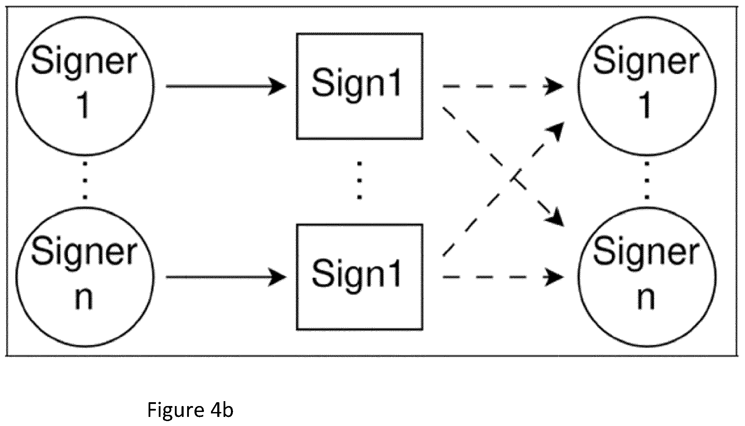

Once the key generation process S101 has been completed, the signing process can commence. The first signature step S103 is Sign1. In embodiments, this is a message independent algorithm, meaning it may be executed prior to knowing the content of the message to sign. The algorithm in this step must be executed by each signer individually, the process is illustrated in Figures 4a and 4b. More specifically, the skilled person will recognise that at least t signers in the group of n signers must execute this algorithm. The identifier of the signer executing Sign1 is denoted in the below as i. The algorithm takes the public matrix of polynomials **A** from S101 as its argument and proceeds as follows:

1. Sample S401 random polynomial vectors with small coefficients. The polynomials are elements of the polynomial ring $\mathbb{Z}_q[X]/(X^N +1)$ with coefficients smaller than q.

2. Compute S403 the output vector $\mathbf{w}_i^{(v)}$ through a linear transformation between **A** and the random polynomial vectors.

3. Send S405 the output vector $\mathbf{w}_i^{(v)}$ to the other signers through point-to-point secure channels. Such channels can, for example, be implemented using Transport Layer Security (TLS).

4. Store S407 the random polynomial vectors locally.

Figure 4b illustrates the processes carried out in Sign1. In figure 4b, solid lines illustrate the inputs and outputs of the process while dashed lines indicated the communications that occur during the process S103. As illustrated in Figure 4b, each Signer executes the Sign1 process separately. Thus, each Signer carries out the steps S104-S407 listed above. At the stage of sending S405 the output vectors, each Signer must communicate with each other Signer to send the output vectors. These output vectors, $\mathbf{w}_i^{(v)}$, are termed "commitments".

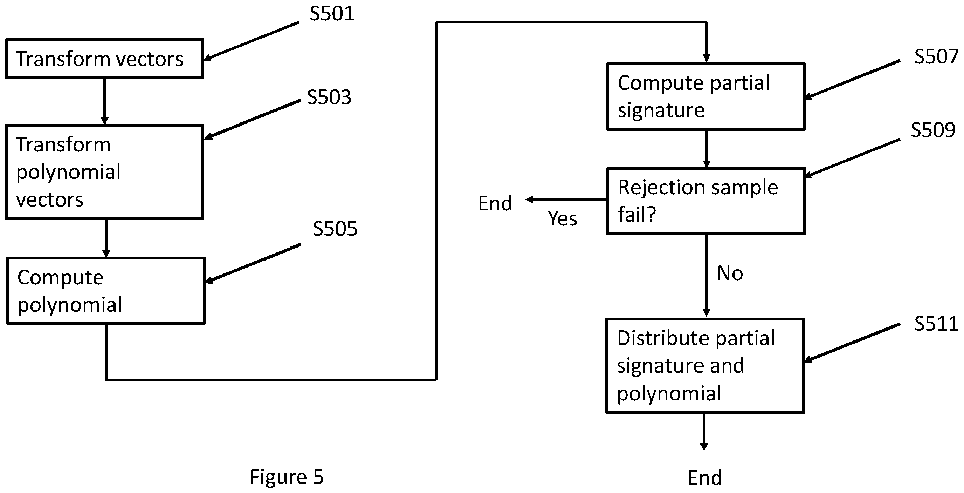

Once the first signing process, Sign1, S103, has been completed, the second signing process, Sign2, S105, can commence. Figure 5 illustrates the Sign2, S105, process. As illustrated in Figure 5, this algorithm is executed by a signer that is identified as i, however the skilled person will recognise that at least $\tau$ signers in the group of n signers must execute this algorithm independently. The size of S and $\tau$ is set prior to initiation of the key generation and signing process and are known by all signers in the set S.

Sign2 takes as arguments the private key of signer i, a set of signers S of size at least $\tau$, the output vectors $\mathbf{w}_i^{(v)}$ output in Sign1 for all the signers in the set S, and the message to sign. The algorithm proceeds as follows:

1. Apply S501 a linear transformation to all vectors $\mathbf{w}_i^{(v)}$ to compute a shared vector **w**. This combines the data from different signers.
2. Apply S503 a linear transformation to the random polynomial vectors of Sign1 to compute a polynomial vector $\mathbf{y_i}$.
3. Compute S505 a polynomial from **w** and the message using a cryptographically secure hash function.
4. Compute S507 a partial signature $\mathbf{z_i}$ with the private key of signer i.
5. Perform a rejection sampling test based on the output of a probabilistic algorithm. If the test is failed, then set S509 $\mathbf{z_i}$ to $\perp$ if not, then skip to the next step. This rejection sampling test is described in greater detail below in steps 12 and 13 of the SignOn (Sign2) process.
6. Send S511 the partial signature $\mathbf{z_i}$ and the polynomial computed in S505 to the other signers in the set S.

Step S509 is used for rejection sampling of the signature calculated in Sign2. If $\mathbf{z_i}$ is determined to be perpendicular ($\perp$), then the algorithm is considered to have failed. In this instance, in embodiments, the process must restart from the beginning of the Sign1 process S103.

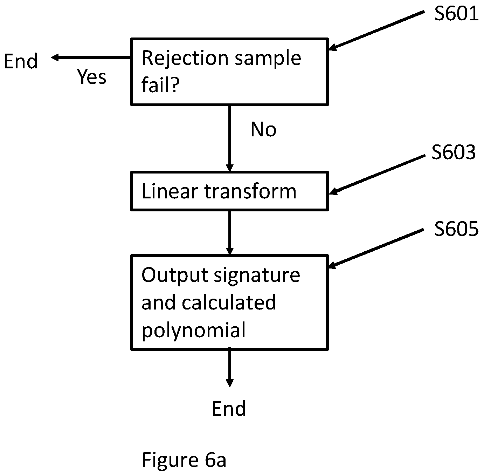

Once the second signing process, Sign2 S105, has been completed, the signature combination process, SignCombine S107, can commence. Figure 6a illustrates the SignCombine S107 process. This algorithm must only be called once t partial signatures are obtained from the signers. If more than $\tau$ partial signatures are received, then any excess can be ignored. For example, the first $\tau$ partial signatures that are received can be employed. SignCombine verifies each partial signature received and outputs a signature valid under the signers' public key.

The SignCombine process S107 can be carried out either at one of the signing entities or on a different entity, such as an aggregator that receives signature data from the different signing entities. In some embodiments, SignCombine is carried out at each signing entity.

As illustrated in Figure 6a, the algorithm proceeds as follows:

1. Verify S601 that none of the partial signatures failed the rejection sample test. This is signalled by each of the signers as an output of their respective rejection sampling. If any partial signature has failed the test, then it is deemed to be perpendicular ($\perp$) and is rejected. This step also verifies that all of the polynomials **w** are equal. If either one or more partial signatures fails the rejection sampling or one or more of the polynomials is not equal, then the SignCombine process will stop.
2. Apply S603 a linear transformation to the partial signatures.
3. Output S605 the resulting signature and the calculated polynomial from step S505.

In some embodiments, if it is detected that any of the partial signatures are rejected or the polynomials **w** are not all the same, then the signature process will restart from Sign1. In other embodiments, in which multiple commitments were calculated during the Sign1 process, the process will restart from Sign2.

In some embodiments, the method will simply reject at least one of the partial signatures that is considered perpendicular, and carry of so long as the other requirements are fulfilled. Similarly, in such embodiments, if it is detected that only one polynomial is different to the others, then the partial signature associated with that polynomial will be rejected and the process continue so long as the other requirements are fulfilled. The skilled person will recognise that, for this to be possible, there must have been more than $\tau$ participants and that more than $\tau$ remain after the rejection.

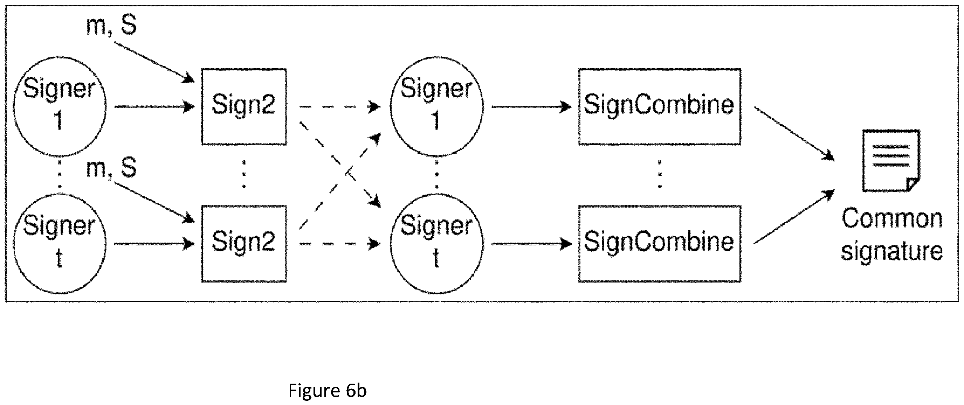

Figure 6b illustrates the inputs and communication that occurs during the processes of Sign2 S105 and SignCombine S107. In figure 6b, solid lines illustrate the inputs and outputs of the process while dashed lines indicated the communications that occur during the processes. As illustrated in Figure 6b, each Signer executes the Sign2 process S105 separately and the SignCombine process S107 separately. At the stage S511 of distributing the partial signatures and polynomials, each of the $\tau$ Signers must communicate with each other Signer to transmit this information. Similarly, after each Signer has determined the combined signature and polynomial, then, in embodiments, these may be transmitted to each other signer.

The processes for Sign1, Sign2, SignCombine, RejSamp and Samp(r) are explained in further detail below. Also explained are the PickSecret, RejSamp and Samp processes, which form part of the SignOn process. Here, the SignOff algorithm represents the Siign1 process, SignOn represents the Sign2 process and SignCombine represents the SignCombine process:

$\underline{\mathsf{SignOff}_i(pk)}:$

1: $\mathbf{y}_i^{(1)} \leftarrow\$ D_{\sigma_1}^{l+k}$

2: **for** $v \in [2, m] : \mathbf{y}_i^{(v)} \leftarrow\$ D_{\sigma_y}^{l+k}$

3: **for** $v \in [1, m] : \mathbf{w}_i^{(v)} := \overline{\mathbf{A}}\mathbf{y}_i^{(v)}$

4: $\mathsf{com}_i := (\mathbf{w}_i^{(1)}, \ldots, \mathbf{w}_i^{(m)})$

5: $\mathsf{st}_i := (\mathbf{y}_i^{(1)}, \ldots, \mathbf{y}_i^{(m)})$

6: **return** $(\mathsf{com}_i, \mathsf{st}_i)$

$\underline{\mathsf{SignOn}_i(\mathsf{SK}_i, S, \mathsf{st}_i, \{\mathsf{com}_j\}_{j \in S}, \mu, pk)}:$

1: $\{r^{(v)}\}_{v \in [2, m]} \leftarrow \mathcal{H}_{\mathsf{non}}(\langle\{\mathsf{com}_j\}_{j \in S}\rangle, \mu, pk)$

2: $b^{(1)} := 1$

3: **for** $v \in [2, m] : b^{(v)} \leftarrow \mathsf{Samp}(r^{(v)})$

4: **for** $v \in [1, m] : \mathbf{w}^{(v)} := \sum_{j \in S} \mathbf{w}_j^{(v)} \lambda_{S,j}$

5: **if** $w_1^{(m)} \notin R_q^\times$ **then**

6:      **return** $\bot$

7: $\tilde{\mathbf{w}} := \sum_{v=1}^m b^{(v)} \cdot \mathbf{w}^{(v)}$

8: $\tilde{\mathbf{y}}_i := \sum_{v=1}^m b^{(v)} \cdot \mathbf{y}_i^{(v)}$

9: $c \leftarrow \mathcal{H}_{\mathsf{sig}}(\tilde{\mathbf{w}}, \mu, pk)$

10: $\mathbf{s}_i := \mathsf{PickSecret}(\mathsf{SK}_i, S)$

11: $\mathbf{z}_i := \tilde{\mathbf{y}}_i + c\mathbf{s}_i$

12: **if** $\mathsf{RejSamp}(c\mathbf{s}_i, \mathbf{z}_i, \{b^{(v)}\}_{v \in [m]}) = 0$ **then**

13:      $\mathbf{z}_i := \bot$

14: **return** $(\mathbf{z}_i, \tilde{\mathbf{w}})$

$\underline{\mathsf{SignCombine}(S, \{(\mathbf{z}_j, \tilde{\mathbf{w}})\}_{j \in S})}:$

1: **return** $\bot$ if any $\mathbf{z}_j = \bot$ for $j \in S$

2: $\mathbf{z} := \sum_{j \in S} \mathbf{z}_j \lambda_{S,j}$

3: **return** $(\mathbf{z}, \tilde{\mathbf{w}})$

$\underline{\mathsf{PickSecret}(\mathsf{SK}_i, S)}:$

1: Returns the secret key $\mathbf{sk}_j \in \mathsf{SK}_i$ where $j \in \psi^{-1}(i)$ satisfying the boolean formula with the set $S$.

$\underline{\mathsf{RejSamp}(\mathbf{v}, \mathbf{z}, \{b^{(v)}\}_{v \in [m]})}:$

1: $s := \sigma_1^2 + \sigma_y^2 \sum_{v=1}^m b^{(v)^2}$

2: $\rho \leftarrow\$ [0, 1]$

3: **if** $\rho \geq \min\left(D_{\sqrt{\sigma_1}}^{l+k}(\mathbf{z}) \; / \; (M \cdot D_{\sqrt{s},\mathbf{v}}^{l+k}(\mathbf{z})), 1\right)$ **then**

4:      **return** 0

5: **return** 1

$\underline{\mathsf{Samp}(r)}:$

1: Sample $b \sim D_{\sigma_b}$ using randomness $r$

2: **return** $b$

$D_s$ denotes the discrete Gaussian distribution centred at zero with variance s.

SignOff (i.e. sign1) proceeds as follows:

In step 1 above, a random vector, **A,** is generated by sampling from a Gaussian distribution. This corresponds to step S401.

In step 2 vector **A** is extended by adding an identity matrix. This generates (m-1) additional random vectors by sampling from another random distribution. The process simplifies later calculations and corresponds to step S403.

Steps 1 and 2 above are used to generate random values, which are random vectors of polynomials. The skilled person will understand that this can be used to aid in maintaining the secrecy of the private keys.

In step 3, m committed values are computed using a part of the public key (vector A). This step is used to commit the random values using a public matrix, i.e. the matrix A, which forms a part of the public key. The step both hides the generated random vectors and prevents anyone from modifying the vectors after the fact.

In step 4, the committed values are stored inside a variable $\mathbf{com_i}$.

In step 5, the random values are stored in inside a variable names $st_i$.

Steps 4 and 5 are employed to simplify the notation, and are not an essential part of the SignOff process. Thus, these steps can be omitted.

In step 6, the committed and random values are returned. The caller of SignOff (which is the sign1 process) then transmits $\mathbf{com_i}$ to the other signers (shareholders). This is step S407.

SignOn (i.e. sign2) proceeds as follows:
In steps 1 to 4, a partial signature is computed using a subset of the received committed values and the local committed values and the message. The computation of the partial signature includes the successive multiplication of each committed value by a recovery coefficient, $\lambda$.

$\lambda$ is derived from the identity of the remote entities and the signer's own identity. It is used to interpolate a common value hidden inside the committed value. This permits generation of a valid signature, that is to say a signature that can be verified with the public key. The skilled person will recognise that, this step mirrors an operation computed during the key generation, inside PVSS.

For example, in embodiments, $\lambda$ can be computed by assigning each participant (signer) a unique number between 0 and ($\tau$-1), and the value of participant j's $\lambda=(-1)^j$. The skilled person will recognise that other methods of computing values for $\lambda$ can equally be used.

Step 3 of the SignOn process employs a process termed Samp(r). This is used to output a value $b^{(v)}$ that is sampled from a Gaussian distribution D having a variance $\sigma_b$. The skilled person will recognise that other probability distributions can equally be used, such as a binomial distribution or other probability distributions. Thus, in alternative embodiments a different probability distribution is employed. Moreover, the probability distribution used here need not be the same as that employed in the key generation step S307.

In steps 5 and 6, a validation test is made as to whether each of the committed values, $com_i$, received from the other signers and the committed value calculated locally in the SignOff process are suitable for use. Thus, in these steps, it is tested whether each received value of $\mathbf{w}$ within the $\mathbf{com_i}$ variable is a member of $R_q$. If not, then the value of $\mathbf{w}$ is rejected as being perpendicular, wherein the term perpendicular is used here to define the value as being unsuitable.

Steps 7-11 are performed only if the rejection sampling in steps 5 and 6 shows that the values of w are acceptable.

In step 7, $\tilde{\mathbf{W}}$ is calculated as a linear combination of $W^v$ from step 4 and $b^{(v)}$ from steps 2 and 3 of SignOn.

In step 8 $\tilde{\mathbf{y}}_i$ is calculated as a linear combination of $\mathbf{y}_i^{(v)}$ from step 2 of the SignOff process and $b^{(v)}$ from steps 2 and 3 of SignOn.

In step 9, c is computed as the Hash of $\tilde{\mathbf{W}}$, $\mu$ (the message) and the public key pk.

In step 10, a function PickSecret is called to return the private key corresponding to rhe set of signers S.

In step 11, part of the partial signature, $\mathbf{z}_i$, is computed as the sum of $\tilde{\mathbf{y}}_l$, (from step 8) and c (from step 9) times the private key (from step 10).

In steps 12 and 13 a rejection sampling is performed on the generated partial signature. These steps are illustrated in the RejSamp section, which is described in greater detail below.

In step 14, the values of $\mathbf{z}$ and $\mathbf{w}$ are returned if the rejection sampling test has been passed.

SignCombine proceeds as follows:
In step 1 a check is made as to whether any of the received partial signatures has failed the rejection sampling carried out by each signer. If a particular singer has determined that their rejection sampling test indicates a failure, then this would be signalled in that signer's output from SignOn. Any signers response indicating a failure will mean that that either the SignCombine process must stop or, if it continues, that signer must be excluded from the SignCombine process.

In step 2, a combined signature is computed using the computed partial signature from SignON and the received partial signatures from the other signers (also from SignOn). The computation of the combined signature includes the successive multiplication of each partial signature by the recovery coefficient $\lambda$ and the summation of the result. $\lambda$ here is the same as that calculated in SignOn.

The RejSamp proceeds as follows:

In step 1, a value of the variance used for rejection sampling is calculated.

In step 2, a random value, $\rho$, is drawn with a random distribution.

In step 3 a test is made as to whether ρ is larger than a value generated using a discrete Gaussian distribution and **z**. If ρ is larger than this value then the partial signature in question is rejected (return 0). If ρ is not larger than the value, then the partial signature is acceptable (return 1).

As noted above, the process Samp(r) is used in step 3 of the SignOn process. This is used to output a value b that is sampled from a Gaussian distribution D having a variance $\sigma_b$.

After performing the SignCombine process, the signed message can then be transmitted to another party and subsequently verified to prove that the message is genuinely a message signed in the described manner.

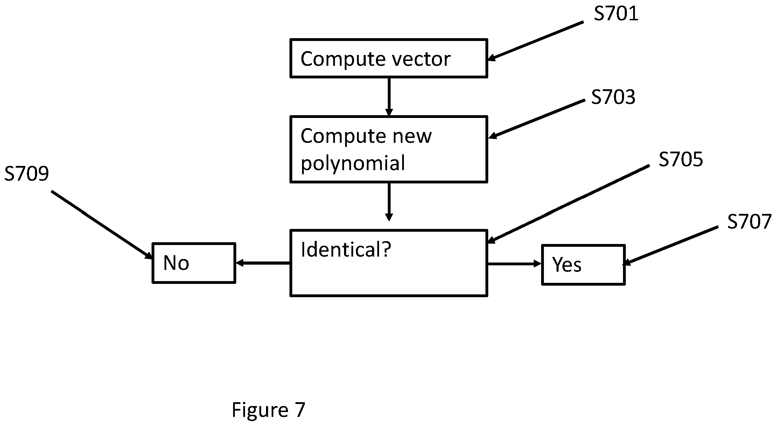

To verify the signed message, the verification process is illustrated in figure 7 and proceeds as follows:

1. Compute S701 a vector **w** from linear operations on the public values, the signature and the polynomial. This is step 2 in the pseudocode below.
2. Compute S703 a new polynomial from **w** and the message using a cryptographically secure hash function. This is step 1 in the pseudocode below.
3. Determine S705 whether the polynomial received with the signed message is identical to the polynomial calculated in S703. This is also step 2 in the pseudocode.
4. Output 1 (success) S707 if both challenge polynomials are equal and if the norm of the signature is smaller than a bound B. This is step 3 in the pseudocode.
5. Output 0 (failure) S709 otherwise. This is step 4 in the pseudocode.

This process is illustrated in further detail below:

$$
\begin{aligned}
&\text{Verify}((\overline{\mathbf{A}}, \mathbf{t}) = pk, (\mathbf{z}, \mathbf{w}) = \sigma, \mu): \\
&1: \quad c \leftarrow \mathcal{H}_{\text{non}}(\mathbf{w}, \mu, pk) \\
&2: \quad \textbf{if } \|\mathbf{z}\| \leq B \ \wedge \ \mathbf{w} = \overline{\mathbf{A}}\mathbf{z} - ct \ \textbf{then} \\
&3: \quad\quad \textbf{return } 1 \\
&4: \ \textbf{return } 0
\end{aligned}
$$

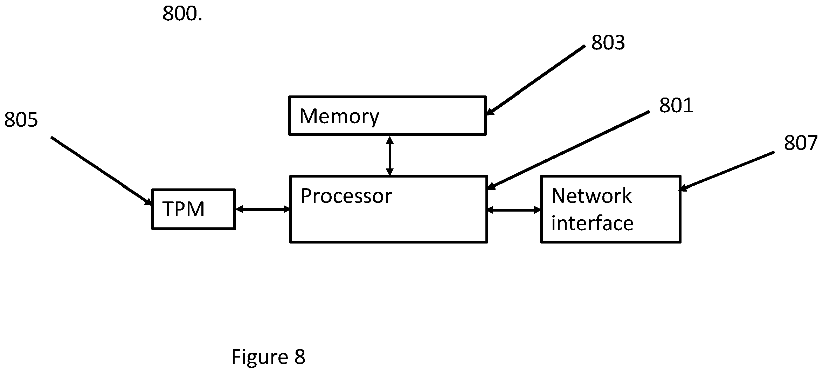

Figure 8 illustrates an example hardware device 800 that can be used to implement the methods as disclosed. The hardware device can comprise a processor 801 that is in communication with a memory 803, a trusted platform module, TPM, 805 and a network interface 807.

The memory stores instructions that, when implemented by the processor 801, cause the processor to perform any of the methods described above. As is described above, the private signing keys can be stored in the TPM 805 for use in the method. The storage can occur prior to purchase of the hardware device 800, or alternatively, they can be stored later.

In alternative embodiments, the TPM 805 can be omitted, and the private signing keys can be stored in an area of the memory 803.

Embodiments can include features that are embedded in a computer program product, which, when loaded in an information processing system, is able to carry out the methods described. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

**Claims**

1. A method of performing a threshold digital signature of a message, the method comprising:

   receiving, at a signing entity, one of a plurality of private signing keys and a public verification key, wherein each of the plurality of private signing keys is associated with the public verification key and the public and private keys are generated using a lattice-based signature scheme;
   computing (S103) a first commitment and transmitting the first commitment to each of a plurality of remote entities;
   receiving a commitment from each of a subset of the plurality of remote entities;
   computing (S105) a first partial signature using the received commitments and the first commitment, the received private key, and the message, wherein the computation of the first partial signature includes performing a linear transformation using a polynomial vector threshold secret sharing scheme, PVSS, on the commitments and combining the transformed commitments;
   transmitting the first partial signature to each of the subset of remote entities;
   receiving a partial signature from each of the subset of the plurality of remote entities; and
   computing (S107) a combined signature using the computed first partial signature and the received partial signatures.

2. The method of claim 1, wherein the computation (S103) of the first commitment comprises sampling a linear transformation between a matrix of polynomials and random polynomial vectors that are elements of the polynomial ring $R_q := \mathbb{Z}_q[X]/(X^N +1)$.

3. The method of any preceding claim, wherein the computation (S105) of the first partial signature satisfies $\mathbf{w}^v = \sum_{j \in s} wj^{(v)}\lambda_{s,j}$, where $\mathbf{w}^{(v)}$ represents the first partial signature, $\mathbf{w_j}$ represents each commitment, s is the set of signers, the summation is performed over j, and $\lambda_S$ is a reconstruction vector satisfying $\lambda_S \in \{-1, 0, 1\}^{d_S}$ where $d_S$ is a parameter related to the implementation of the PVSS used to generate the keys.

4. The method of claim 3, wherein the first partial signature further comprises a polynomial that is computed using the commitments, the message and a cryptographically secure hash function.

5. The method according to claim 2, further comprising a first validation step performed on the first commitment and the received commitments, wherein a commitment is rejected if the commitment is not a member of the ring $R_q$.

6. The method of any preceding claim, wherein the computation (S107) of the combined signature further comprises applying a linear transform to the received partial signatures and the first partial signature to satisfy $\mathbf{z} := \sum_{j \in s}\mathbf{z}_j\lambda_{s,j}$ where $\mathbf{z}$ represents the combined signature, j represents an iteration over every signer, s, and z: is the partial signature.

7. The method of any preceding clam, further comprising a rejection sampling step performed on the first partial signature, wherein the first partial signature is rejected if:

   1.

$$\rho \geq \min\left( D^{l+k}_{\sqrt{\sigma_1}}(\mathbf{z}) \,/\, (M \cdot D^{l+k}_{\sqrt{s},\mathbf{v}}(\mathbf{z})), 1 \right),$$

$$s := \sigma_1^2 + \sigma_y^2 \sum_{v=1}^{m} b^{(v)^2}, \quad \rho \leftarrow\!\$ \, [0, 1],$$

where D is a Gaussian distribution, **z** is the partial signature I and k are the width and length respectively of a random matrix **A**, m is a parameter related to the security, $\sigma_1$ and $\sigma_y$ are standard deviations of different Gaussian distributions, M is a security parameter and $b^{(v)}$ is a value sampled from a Gaussian distribution.

8. The method of any preceding claim, further comprising, at a key-generation entity, generating (S101) the plurality of private signing keys and the public verification key by:

   generating (S301) a threshold Boolean formula representing a $\tau$-out-of-n access structure;

   sampling (S303) random polynomial vectors which are elements of the polynomial ring $\mathbb{Z}_q[X]/(X^N + 1)$;
   computing (S305) n private keys through a linear combination of the random polynomials using the Benaloh-Leichter Generalized Secret Sharing scheme, BL88;

   generating (S307) a public matrix of polynomials **A** in $\mathbb{Z}_q[X]/(X^N + 1)$ uniformly at random; and
   computing S309 a public vector **t** through a linear transformation between A and a linear combination of the n private keys.

9. The method of claim 8, wherein the private signing keys are shared using a polynomial vector threshold secret sharing scheme, PVSS.

10. The method of any preceding claim, wherein the step of computing (S107) the combined signature is carried out at an entity that is remote from the signing entity.

11. The method of any preceding claim, wherein a plurality of private signing keys are received at the signing entity and the signing entity computes (S103)a first commitment from each of the plurality of received private signing keys and a first selected first commitment is transmitted to each of the plurality of remote entities.

12. The method of claim 11 when dependent from claim 6, wherein a second selected first commitment is transmitted to the plurality of remote entities when a determination is made that the first selected first commitment is rejected.

13. A computer device comprising a processor and a memory, wherein the memory includes instructions which, when implemented, cause the processor to perform all of the steps of the method of any of claims 1 to 12.

14. A computer device according to claim 13, wherein the private signing key is stored within a secure hardware device within the computer device.

15. A computer program product comprising computer readable instructions which, when implemented on a system comprising a processor perform all of the steps of the method of any of claims 1-12.

```
                          ┌─────────────────────┐ ◄──────  S101
                          │  Key Generation     │
                          └─────────────────────┘
                                     │
                                     ▼
                          ┌─────────────────────┐ ◄──────  S103
                          │  Sign 1             │
                          └─────────────────────┘
                                     │
                                     ▼
                          ┌─────────────────────┐ ◄──────  S105
                          │  Sign 2             │
                          └─────────────────────┘
                                     │
                                     ▼
                          ┌─────────────────────┐ ◄──────  S107
                          │  Sign Combine       │
                          └─────────────────────┘
                                     │
                                     ▼
                                    End
```

Figure 1

Figure 2

EP 4 496 261 A1

```
                                                      S301
  ┌──────────────────┐                                      ┌──────────────────┐   S307
  │ Generate Boolean │                               ┌─────▶│ Generate public  │
  └──────────────────┘                               │      │ matrix           │
           │                                S303      │      └──────────────────┘
           ▼                                          │               │
  ┌──────────────────┐                                │               ▼
  │ Sample           │                                │      ┌──────────────────┐   S309
  │ polynomial       │                                │      │ Compute public   │
  │ vectors          │                                │      │ vector           │
  └──────────────────┘                                │      └──────────────────┘
           │                                S305      │               │
           ▼                                          │               ▼
  ┌──────────────────┐                                │      ┌──────────────────┐   S311
  │ Compute private  │                                │      │ Distribute private│
  │ keys             │                                │      │ keys             │
  └──────────────────┘                                │      └──────────────────┘
           │                                          │               │
           └──────────────────────────────────────────               ▼
                                                             ┌──────────────────┐   S313
                                                             │ Publish public key│
                                                             └──────────────────┘
                                                                      │
                                                                      ▼
              Figure 3                                              End
```

Figure 3

```
                                    ┌──────────── S401
         ┌──────────────────┐ ◄─────┘
         │ Sample           │
         │ polynomials      │
         └──────────────────┘        ┌──────── S403
                  │         ◄─────────┘
                  ▼
         ┌──────────────────┐
         │ Compute vectors  │
         └──────────────────┘
                  │                   ┌──────── S405
                  ▼         ◄─────────┘
         ┌──────────────────┐
         │ Transmit vectors │
         └──────────────────┘
                  │                   ┌──────── S407
                  ▼         ◄─────────┘
         ┌──────────────────┐
         │ Store polynomials│
         └──────────────────┘
                  │
                  ▼
                 End
```

Figure 4a

Figure 4b

```
                                                    ┌─────────────────┐
                                            S501 ───│ Transform       │
                                                    │ vectors         │
                                                    └────────┬────────┘
                                                             │
                                                    ┌────────▼────────┐
                                            S503 ───│ Transform       │
                                                    │ polynomial      │
                                                    │ vectors         │
                                                    └────────┬────────┘
                                                             │
                                                    ┌────────▼────────┐
                                            S505 ───│ Compute         │
                                                    │ polynomial      │
                                                    └─────────────────┘
```

Figure 5

```
                                    ┌─────────────────┐
                            S507 ───│ Compute partial │
                                    │ signature       │
                                    └────────┬────────┘
                                             │
                                    ┌────────▼────────┐
                            S509 ───│ Rejection sample│──── Yes ──── End
                                    │ fail?           │
                                    └────────┬────────┘
                                             │ No
                                    ┌────────▼────────┐
                            S511 ───│ Distribute partial│
                                    │ signature and   │
                                    │ polynomial      │
                                    └────────┬────────┘
                                             │
                                            End
```

```
                                              ┌──────── S601
                    ┌─────────────────────┐
End ◄───── Yes ─────│ Rejection sample    │◄───
                    │ fail?               │
                    └─────────────────────┘
                              │
                             No
                              │
                              ▼
                    ┌─────────────────────┐   ┌──────── S603
                    │ Linear transform    │◄───
                    └─────────────────────┘
                              │
                              │              ┌──────── S605
                              ▼
                    ┌─────────────────────┐
                    │ Output signature    │◄───
                    │ and calculated      │
                    │ polynomial          │
                    └─────────────────────┘
                              │
                              ▼
                             End
```

Figure 6a

Figure 6b

EP 4 496 261 A1

S701

Compute vector

S703

Compute new
polynomial

S709

S705

S707

No ← Identical? → Yes

Figure 7

800.

Figure 8

| | | Europäisches Patentamt<br>European Patent Office<br>Office européen des brevets | **EUROPEAN SEARCH REPORT** | **Application Number**<br>EP 23 18 6448 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RYAN HENRY ET AL: "Practical PIR for electronic commerce", COMPUTER AND COMMUNICATIONS SECURITY, ACM, 2 PENN PLAZA, SUITE 701 NEW YORK NY 10121-0701 USA, 17 October 2011 (2011-10-17), pages 677-690, XP058006092, DOI: 10.1145/2046707.2046784 ISBN: 978-1-4503-0948-6 | 1-6,8-15 | INV.<br>H04L9/08<br>H04L9/30<br>H04L9/32 |
| A | * sections 3, 4 * | 7 | |
| X | EASWAR VIVEK MANGIPUDI ET AL: "D-KODE: Mechanism to Generate and Maintain a Billion Keys", IACR, INTERNATIONAL ASSOCIATION FOR CRYPTOLOGIC RESEARCH , vol. 20220220:200209 12 February 2022 (2022-02-12), pages 1-18, XP061070261, Retrieved from the Internet: URL:https://eprint.iacr.org/2022/161.pdf [retrieved on 2022-02-12] | 1-6,8-15 | |
| A | * sections 2, 3, 4, 5, 6, 7; figures 1-5 * | 7 | |
| A | ADAM D SMITH: "Quantum secret sharing for general access structures", ARXIV.ORG, CORNELL UNIVERSITY LIBRARY, 201 OLIN LIBRARY CORNELL UNIVERSITY ITHACA, NY 14853, 24 January 2000 (2000-01-24), XP080011238, * the whole document * | 1-15 | |

**TECHNICAL FIELDS SEARCHED (IPC)**

H04L

The present search report has been drawn up for all claims

| Place of search | Date of completion of the search | Examiner |
|---|---|---|
| Munich | 12 December 2023 | Spranger, Stephanie |